## Europäisches Patentamt

## European Patent Office

## Office européen des brevets

(19)

(11) Numéro de publication: **0 018 301**
**B1**

(12) **FASCICULE DE BREVET EUROPEEN**

(45) Date de publication du fascicule du brevet:
05.02.86

(51) Int. Cl.⁴: **F 16 D 69/02**

(21) Numéro de dépôt: 80420041.8

(22) Date de dépôt: 27.03.80

(54) Matériaux de frottement.

(30) Priorité: 29.03.79 FR 7908576

(43) Date de publication de la demande:
29.10.80 Bulletin 80/22

(45) Mention de la délivrance du brevet:
05.02.86 Bulletin 86/6

(84) Etats contractants désignés:
AT BE CH DE GB IT LU NL SE

(56) Documents cités:
FR - A - 990 687
FR - A - 999 095
FR - A - 1 094 751
FR - E - 70 008

(73) Titulaire: **CENTRE STEPHANOIS DE RECHERCHES MECANIQUES HYDROMECANIQUE ET FROTTEMENT Société dite:, Zone Industrielle Sud Rue Benoît Fourneyron, F-42160 Andrezieux Boutheon (FR)**

(72) Inventeur: **Cartier, Michel, Chalain le Comtal, F-42600 Montbrison (FR)**
Inventeur: **Cros, Georges, 50 Rue Michel Laval, F-42000 Saint Etienne (FR)**

(74) Mandataire: **Maisonnier, Jean, Bureau Maisonnier 28 Rue Servient, F-69003 Lyon (FR)**

## Description

L'invention concerne des matériaux de frottement à très facile taux d'usure contenant en tant de charge, des tissus animaux du type potéine fibreuse riche en hydroxyproline, tel que défini dans le préambule de la revendication 1.

La diminution de l'usure a de tout temps été une preoccupation majeure pour le mécanicien, et notamment toutes les fois où il s'agit d'améliorer la longévité et la fiabilité de mecanismes mettant en oeuvre des pièces frottantes.

C'est dans cet esprit que, depuis très longtemps, on a cherché à mettre au point des matériaux capables, alors qu'ils sont mis en contact de frottement avec une surface quelconque (d'acier, de fonte, ou autre), de fonctionner avec une très faible usure.

A cet effet ont été proposées de très nombreuses compositions allant des alliages métalliques, aux matériaux frittés, en passant par les matériaux plastiques, etc... Plus récemment, sont apparus les matériaux du type 'composite' dans lesquels, à une matrice (métallique, polymère, ou autre) est associée une charge plus ou moins complexe faite d'un ou plusieurs composés jouant des rôles divers : rôle de renfort (par exemple, fibre d'amiante , fibre de verre, fibre cellulosique), rôle de lubrifiant solide (par exemple graphite, bisulfure de molybdèner etc...) ou autres rôles, tels que stabilisant thermique, anti-oxydant, etc...

On a même proposé, par le brevet français 990 687 d'utiliser comme charge, des fibres de cuir obtenues par défibrage de déchets de cuir. Cette technique connue est d'un emploi très limité, d'une part du fait qu'elle oblige à défibrer du cuir, d'autre part, du fait que, outre du collagène, le cuir contient divers constituants ne convenant pas pour certaines applications.

La présente invention concerne une composition utilisable en tant que charge d'une matrice quelconque, notamment polymère, ladite composition étant capable de conférer au matériau de frottement ainsi réalisé, des propriétés de résistance à l'usure inégalées à ce jour. Elle découle des travaux faits par la Demanderesse dans le domaine de l'utilisation en frottement des substances organiques et propose plus particulièrement, au titre de charge, l'emploi de la poudre d'os pour la réalisation matériaux de frottement, tel que caractérisé dans la revendication 1.

Des résultats particulièrement intéressants ont été obtenus à partir de la poudre d'os. La Demanderesse a, en effet, découvert, comme il sera illustré dans l'exemple décrit ci-après, que les matériaux dans la composition desquels entre une substance du type précité, possèdent des propriétés de résistance à l'usure exceptionnelles, à tout le moins de plusieurs fois superieures à celles des mêmes matériaux exempts de ladite substance.

Avantageusement, l'invention propose, au titre de la poudre d'os étant une proteine fibreuse riche en hydroxyproline, d'utiliser la substance dénommée collagène, c'est-à-dire cette protéine particulière à poids moléculaire élevé, riche en hydroxyproline, que l'on trouve dans pratiquement toutes les classes du règne animal et qui est le principal constituant des tissus conjonctifs. On peut rappeler à ce sujet, que le collagène est le constituant fondamental de l'armature qui maintient en forme, dans les organismes animaux, les différents organes, au même titre que le fait la cellulose dans le monde végétal.

Suivant une caractéristique supplémentaire, la charge selon l'invention peut être utilisée seule ou associée à d'autres adjuvants, tels que renforts, stabilisants, lubrifiants, fongicides, colorants, agents antistatiques, agents ignifugeants, plastifiants ou autres produits minéraux ou organiques.

On trouvera maintenant, dans l'exemple ci-après, donné à titre non limitatif, une description des performances auxquelles conduisent des matériaux dans la composition desquels entre la charge conforme à l'invention.

**Exemple:** Il s'agit d'un essai effectué au titre de matériau contenant la charge conforme à l'invention, dans lequel on a utilisé un mélange comprimé à chaud de 1/3 de résine, 1/3 de poudre de cuivre, 1/3 de poudre d'os.

On notera que la poudre d'os représente la charge conforme à l'invention, puisque cette matière est principalement constituée par du collagène. Dans ces conditions, on a obtenu un taux d'usure extremement faible des patins puisque l'usure ne dépassait pas 0,15 mm après 35 minutes d'essai.

D'une manière générale, préalablement à son utilisation en tant que charge, la poudre d'os peut être imprégnée d'une autre substance. Par exemple, on peut l'imprégner d'un corps gras dont l'origine peut être animale, végétale, ou synthétique.

## Revendications

1 - Matériaux de frottement à très faible taux d,usure contenant en tant que charge, des tissus animaux du type proteine fibreuse riche en hydroxyproline, caractérisés en ce que la charge est constituée par de la poudre d'os.

2 - Matériaux de frottement suivant la revendication 1, caractérisés en ce que, préalablement à son utilisation en tant que charge, la poudre d'os est imprégnée d'une autre substance.

3 - Matériaux de frottement suivant la revendication 2, caractérisés en ce que ladite substance est du groupe comprenant les corps gras d'origine végétale, les corps gras d'origine animale, et les corps gras de synthèse.

4 - Matériaux de frottement suivant la revendication 1, caractérisés en ce que la poudre d'os est associée, pour la réalisation du matériau de frottement composite, à une ou plusieurs autres substances telles que renforts, stabilisants, lubrifiants, colorants, agents anti-statiques, agents ignifugeants, fongicides, plastifiants ou autres produits minéraux ou organiques.

5 - Matériaux de frottement suivant, la revendication 1, caractérisés en ce que la poudre d'os est associée, pour la réalisation du matériau de frottement, à une matrice polymère.

6 - Matériaux de frottement suivant la revendication 1, caractérisés en ce que ladite matrice polymère est du type résine phénoplaste thermodurcissable.

## Claims.

1. A friction material with a very low rate of wear containing by way of filling animal tissues of a fibrous protein type rich in hydroxyproline, characterised in that the filling is made up of powdered bone.

2. A friction material according to Claim 1, characterised in that the powdered bone is impregnated with another substance prior to its use as filling.

3. A friction material according to Claim 2, characterised in that the said substance is of the group comprising fatty bodies of vegetable or animal origin, and synthetic fatty bodies.

4. A friction material according to Claim 1, characterised in that the powdered bone is associated in the manufacture of a composite friction material with one or several other substances such as strengtheners, stabilisers, lubricants, colourings, anti-static agents, fireproofing agents, fungicides, plasticisers or other mineral or organic products.

5. A friction material according to Claim 1, characterised in that the powdered bone is associated with a polymeric matrix in the manufacture of the friction material.

6. A friction material according to Claim 1, characterised in that the said polymeric matrix is of the thermosetting phenoplastic resin type.

## Patentansprüche

1. Werkstoff zur Reibbehandlung mit sehr geringem Verschleißkoeffizienten, der als Zuschlagstoff tierische Gewebe vom fibrösen Proteintypus enthält, die reich an Hydroxyprolin sind, dadurch gekennzeichnet, daß der Zuschlagstoff aus Knochenmehl besteht.

2. Werkstoff nach Anspruch 1, dadurch gekennzeichnet, daß das Knochenmehl vor der Anwendung als Zuschlagstoff mit einer anderen Substanz imprägniert wird.

3. Werkstoff nach Anspruch 2, dadurch gekennzeichnet, daß die genannte Substanz einer Gruppe angehört, die fette Körper pflanzlichen, tierischen oder synthetischen Ursprungs ist.

4. Werkstoff nach Anspruch 1, dadurch gekennzeichnet, daß dem Knochenmehl zwecks Verwirklichung des Verbundwerkstoffes zur Reibbehandlung eine oder mehrere Substanzen zugeordnet sind, wie Verstärkungsmittel, Stabilisatoren, Schmiermittel, Farbstoffe, antistatische Mittel, feuerhemmende Mittel, Fungizide, plastifizierende Mittel oder andere mineralische oder organische Produkte.

5. Werkstoff nach Anspruch 1, dadurch gekennzeichnet, daß das Knochenmehl zur Realisierung des Werkstoffes zur Reibbehandlung einer polymeren Matritze zugeordnet ist.

6. Werkstoff nach Anspruch 1, dadurch gekennzeichnet, daß die genannte polymere Matritze aus wärmeaushärtbarem Kunstharz-Phenoplast besteht.